# EUROPEAN PATENT SPECIFICATION

(11) **EP 3 632 219 B1**
(45) Date of publication and mention of the grant of the patent: **08.05.2024**
(21) Application number: 18805201.3
(22) Date of filing: 23.05.2018
(51) Int. Cl.: A23L 7/109, A23L 29/219, A23L 33/20

(54) **LOW-CARBOHYDRATE NOODLE MIX**
KOHLENHYDRATARME NUDELMISCHUNG
MÉLANGE DE NOUILLES À FAIBLE TENEUR EN GLUCIDES

(30) Priority: 23.05.2017 JP 2017101982
(43) Date of publication of application: 08.04.2020
(73) Proprietor: Nisshin Seifun Welna Inc., Tokyo 101-8441 (JP)
(72) Inventor: KIMURA, Ryusuke, Fujimino-shi Saitama 356-8511 (JP); FUJII, Tomoyuki, Fujimino-shi Saitama 356-8511 (JP); ASAHINA, Kenta, Fujimino-shi Saitama 356-8511 (JP); HIGASHI, Masafumi, Fujimino-shi Saitama 356-8511 (JP)
(74) Representative: Blodig, Wolfgang
(86) International application number: PCT/JP2018/019742
(87) International publication number: WO 2018/216706

(56) References cited:
- JP-A- S5 971 657
- JP-A- H10 262 589
- JP-A- H10 313 804
- JP-A- H10 313 804
- JP-A- 2000 295 970
- JP-A- 2001 017 104
- JP-A- 2004 229 570
- JP-A- 2005 065 505
- JP-A- 2006 129 790
- JP-A- 2006 129 790
- JP-A- 2008 043 254
- JP-A- 2012 115 173
- JP-A- 2015 092 848
- JP-A- 2016 002 000
- JP-A- 2016 052 290
- JP-A- 2017 023 050
- JP-A- 2017 023 050
- SUGANO, Jyozo: "Regarding basic knowledge and present status of modified starch", Hydroxypropyl starch , 10 May 2010 (2010-05-10), pages 1-7, XP055648038, Retrieved from the Internet: URL:https://www.alic.go.jp/joho-d/joho07_0 00055.html

## Description

### [Technical Field]

The present invention relates to a low-carbohydrate noodle mix capable of producing low-carbohydrates.

### [Background Art]

In recent years, in order to avoid excessive caloric intake, consumption of foods such as noodles, which are mainly made of cereal flour and contain a large amount of carbohydrates, has been sometimes discouraged. Meanwhile, in order to suppress calories of foods or increase the amount of dietary fiber, foods in which carbohydrate is replaced with dietary fiber have also been proposed. For example, Patent Documents 1 and 2 disclose powders for low-carbohydrate noodles containing indigestible starch and indigestible dextrin. Patent Document 3 discloses noodles containing a cereal flour, a starch containing 60% by weight or more of a resistant starch, and a modified starch subjected to a modification to lower the gelatinization starting temperature. Patent Document 4 discloses a mix composition for preparing noodles comprising grain flour, 10-30% of indigestible starch, 5-20% of hydroxypropylated starches and/or acetylated starches, 1-3% wheat protein with respect to grain flour. Patent Document 5 discloses a mix for pasta comprising 19-99% wheat flour or wheat semolina, 10-40% resistant starch,10-35% other starches, and auxiliary materials.

However, dietary fiber has a characteristic taste and odor, and also affects the texture. For this reason, noodles containing a large amount of dietary fiber generally have a problem that the flavor and texture are deteriorated. For example, a noodle dough containing indigestible starch has poor noodle-making properties and tends to have a crumbly fibrous texture even when cooked by boiling. Meanwhile, noodles containing an indigestible dextrin tend to have a sticky texture.

### [Citation List]

### [Patent Document]

[Patent Document 1] JP-A-2016-2000
[Patent Document 2] JP-A-2017-23050
[Patent Document 3] JP-A-H10-313804
Patent Document 4 JP-A-2006-129790
Patent Document 5 JP-A-2016-052290

### [Summary of Invention]

### [Technical Problem]

The present invention relates to a provision of noodles which are rich in dietary fiber and low in carbohydrate, but have an excellent texture.

### [Solution to Problem]

As a result of intensive investigation, the present inventors have found that noodles produced from a mix powder containing, as a raw material, predetermined amounts of indigestible starch derived from wheat, tapioca, corn or sweet potato and a specific modified starch, and having a predetermined protein content have a good elastic texture without a crumbly fibrous texture or a sticky texture, while being rich in dietary fiber and low in carbohydrate.

Accordingly, the present invention provides a noodle mix comprising from 10 to 60% by mass of an indigestible starch derived from one or more of wheat, tapioca, corn and sweet potato, and from 5 to 30% by mass of a modified starch having a gelatinization starting temperature lower than that of a raw material starch thereof by 0.1°C or more, and the mix having a protein content of 8 to 20% by mass, wherein
the indigestible starch is one or or more selected from the group consisting of an indigestible wheat starch, an indigestible tapioca starch, an indigestible corn starch, and an indigestible sweet potato starch,
the modified starch is one or more selected from the group consisting of an acetylated starch and a pregelatinized starch,
the noodle mix further comprises a cereal flour, the content of the cereal flour being 3% by mass or more and 80% by mass or less based on the amount of the indigestible starch, and
the noodle mix does not comprise an indigestible dextrin.
The present invention also provides a method for producing noodles comprising:
(i) adding to the noodle mix of the invention, 23 to 40% by mass of kneading water based on the total mass of the noodle mix,
(ii) kneading the mixture to prepare a dough,
(iii) forming noodles by rolling the dough into a noodle sheet and cutting the noodle sheet, or by extruding the dough through dies.

The present invention also provides a noodle obtained by a method consisting of these method steps.

### [Advantageous Effect of Invention]

By using the low-carbohydrate noodle mix of the present invention, it is possible to obtain noodles which are rich in dietary fiber, low in carbohydrate and low in calorie, but have an excellent texture with elasticity without a crumbly fibrous texture or a sticky texture as in conventional noodles containing a large amount of dietary fiber.

### [Description of Embodiment]

The low-carbohydrate noodle mix of the present invention contains an indigestible starch derived from one or more of wheat, tapioca, corn and sweet potato. Hereinbelow, in the present specification, the indigestible starch derived from one or more of wheat, tapioca, corn and sweet potato, which can be used in the low-carbohydrate noodle mix of the present invention, is collectively referred to as "indigestible starch to be used in the present invention".

In other words, the indigestible starch used in the present invention is one or more selected from the group consisting of an indigestible wheat starch, an indigestible tapioca starch, an indigestible corn starch and an indigestible sweet potato starch. Among these, one or more selected from the group consisting of an indigestible wheat starch, an indigestible tapioca starch, and an indigestible corn starch are preferable. When the indigestible starch used in the present invention is replaced with an indigestible starch derived from other vegetable raw materials, the resulting noodles are low-carbohydrate but have a poor texture.

Preferably, the indigestible starch used in the present invention is two or more selected from the group consisting of an indigestible wheat starch, an indigestible tapioca starch, an indigestible corn starch and an indigestible sweet potato starch. Preferred combinations include a combination of two or more selected from the group consisting of an indigestible wheat starch, an indigestible tapioca starch and an indigestible corn starch. Among these, a combination of an indigestible wheat starch and an indigestible tapioca starch, a combination of an indigestible tapioca starch and an indigestible corn starch, and a combination of an indigestible wheat starch, an indigestible tapioca starch and an indigestible corn starch are more preferable. Among these, a combination of an indigestible wheat starch, an indigestible tapioca starch and an indigestible corn starch is even more preferable.

The indigestible starch refers to a starch that is not digested and absorbed by the gastrointestinal tract of healthy individuals (resistant starch). Generally, indigestible starch is classified into RS1 to RS4. Although starch itself is easily digested, RS1 is an indigestible starch which is physically protected by an outer skin or the like, and therefore is not received by an action of digestible enzymes, is resistant to digestion, and is mainly contained in whole grain flour, seeds, legumes, and the like. RS2 is an unmodified indigestible starch (raw material starch) which is resistant to digestion due to the special crystal structure of starch granules or a starch treated to have an improved resistance to digestion to such an extent that the crystal structure is not significantly changed, and examples thereof include potato starch and immature banana starch. RS3 is an indigestible starch which is resistant to digestion because a crystal structure thereof is changed such that it is difficult for digestive enzymes to act due to retrogradation of starch, and examples thereof include retrograded starch obtained by once being gelatinized (pregelatinization) by heating and then cooled. RS4 is an indigestible starch which is resistant to digestion by being chemically modified to a high degree, and examples thereof include a starch subjected to a strong cross-linking treatment and a starch subjected to etherification or esterification. The indigestible starch used in the present invention is a starch corresponding to any one of the above RS2 to RS4, and has a dietary fiber content of 20% by mass or more. The dietary fiber content of common starch is mostly less than 6% by mass, and even that of high amylose starch is 10-plus% by mass.

The digestible starch used in the present invention preferably has a higher dietary fiber content, since the low-carbohydrate property of noodles can be secured. Therefore, the indigestible starch used in the present invention preferably has a dietary fiber content of 50% by mass or more, and more preferably 60% by mass or more. The indigestible starch having a high dietary fiber content can be produced, for example, by subjecting a raw material starch to a heat-moisture treatment or a modification such as chemical cross-linking so as not to change the crystal structure by a known method. Alternatively, a commercially available indigestible starch having a dietary fiber content of 50% by mass or more which has been subjected to such a treatment or modification can be used as the indigestible starch to be used in the present invention. Examples of such commercially available indigestible starch include Nisshoku Roadster (manufactured by Nihon Shokuhin Kako Co., Ltd.), Hi-Maize 1043 (manufactured by Ingredion), Actistar 11700 (manufactured by Cargill Japan), Novelose 3490 (manufactured by Ingredion), Novelose W (manufactured by Ingredion), Pine Starch RT (manufactured by Matsutani Chemical Industry Co., Ltd.), Fiber Gym RW (manufactured by Matsutani Chemical Industry Co., Ltd.), and Actistar RT 75330 (manufactured by Cargill Japan).

In the present specification, the dietary fiber content of starch is a value determined by the enzyme-gravimetric method (Prosky method) based on AOAC985.29. The dietary fiber content can be determined using a commercially available measurement kit based on the Prosky method, such as the Dietary Fiber Assay Kit (Wako Pure Chemical Industries, Ltd.).

The content of the indigestible starch used in the present invention in the noodle mix of the present invention is from 10 to 60% by mass, preferably from 25 to 59% by mass, more preferably from 40 to 58% by mass, in the total amount of the mix. When the content of the indigestible starch in the mix is less than 10% by mass, the advantage of being a low carbohydrate is hardly obtained, whereas when the content exceeds 60% by mass, the obtained noodles has a strong fibrous texture.

In addition to the indigestible starch used in the present invention, the noodle mix of the present invention contains a modified starch having a gelatinization starting temperature lower than that of a raw material starch thereof by 0.1°C or more. Hereinbelow, in the present specification, the modified starch having a gelatinization starting temperature lower than that of a raw material starch thereof by 0.1°C or more is also referred to as "modified starch used in the present invention" .

In the present specification, the "modified starch having a gelatinization starting temperature lower than that of a raw material starch thereof" means a starch after subjected to a modification having a gelatinization starting temperature lower than that before subjected to the modification (in a state of unmodified starch). The "gelatinization starting temperature" of a starch in the present specification means a temperature at which an increase in viscosity starts rapidly when the starch is suspended in water and the temperature of the suspension is gradually raised while stirring. That is, a starch has a characteristic that when the starch is heated together with water, it is pregelatinized (gelatinization) and swells to increase its viscosity. Generally, the viscosity of a starch is not changed greatly at a relatively low temperature in the beginning of the temperature rise, but starts to be increased rapidly at a certain temperature or more, reaches a peak (maximum viscosity), and then is decreased . The temperature at which this rapid viscosity increase starts is the "gelatinization starting temperature" in the present specification. The gelatinization starting temperature of a starch can be measured by using, for example, a rapid visco analyzer (RVA). The RVA is a device in which a starch to be measured is suspended in water, and the temperature of the suspension is gradually raised while stirring to measure the viscosity.

The starch used in the present invention is one or more selected from the group consisting of an acetylated starch and a pregelatinized starch. As the acetylated starch, acetylated tapioca starch is preferable, and acetate tapioca starch is more preferable. As the pregelatinized starch, a pregelatinized rice starch is preferable.

The content of the modified starch used in the present invention in the noodle mix of the present invention is from 5 to 30% by mass, preferably from 10 to 28% by mass, more preferably from 15 to 25% by mass in the total amount of the mix. When the content of the modified starch in the mix is less than 5% by mass, the obtained noodles has a strong fibrous texture, while when the content exceeds 30% by mass, the obtained noodles has a strong sticky texture.

The protein content of the noodle mix of the present invention is from 8 to 20% by mass, preferably from 12 to 19% by mass, more preferably from 14 to 18% by mass in the total amount of the mix. When the protein content of the mix is less than 8% by mass, the obtained noodles has a strong sticky texture, while when it exceeds 20% by mass, the obtained noodles has a hard texture. The protein content in the mix of the present invention is a value measured by the Kjeldahl method.

The protein content of the noodle mix can be adjusted by blending a material containing a protein into the mix. Examples of the material containing a protein include a cereal flour, a protein material, and the like. Therefore, the noodle mix of the present invention contains a cereal flour

Examples of the cereal flour include wheat flour such as moderate wheat flour, hard wheat flour and durum flour; rice flour; barley flour; rye; buckwheat flour, and the like. These cereal flours can be used alone or in a combination of two or more kinds. The type of cereal flour used can be selected according to the type of noodles to be produced. For example, but not to be limited, moderate wheat flour is preferred for *udon,* hard wheat or moderate wheat flour for Chinese noodles, buckwheat flour for *soba,* and durum flour for pasta.

Examples of the protein material include wheat protein, egg protein, milk protein, soy protein, gelatin, and the like. Examples of the wheat protein include gluten, gliadin, glutenin, and the like, and gluten is preferable among these. Examples of the egg protein include whole egg powder, egg white powder, egg yolk powder, and the like, and egg white powder is preferable among these. Examples of the milk protein include non-fat dry milk, whey protein, and the like. The above-mentioned protein materials can be used alone or in a combination of two or more kinds. The protein material is preferably one or more selected from the group consisting of wheat protein, egg protein and soy protein, and more preferably one or more selected from the group consisting of wheat protein and egg protein.

The protein content of the noodle mix of the present invention can be adjusted by blending an appropriate amount of the material containing a protein. In order to obtain low-carbohydrate noodles, the content of the cereal flour in the noodle mix of the present invention is 3% by mass or more (preferably 5% by mass or more) and 80% by mass or less ( preferably 60% by mass or less), based on the amount of the indigestible starch used in the present invention. Meanwhile, by blending the cereal flour into the mix of the present invention, the content of the indigestible starch and the modified starch used in the present invention in the mix can be easily adjusted. Therefore, the noodle mix of the present invention preferably contains both the cereal flour and the protein material. This makes it possible to suppress the amount of carbohydrates in the mix while adjusting the contents of the indigestible starch and the modified starch used in the present invention and the protein content within the above-mentioned ranges.

The noodle mix of the present invention may contain an additional raw material that can be usually used for producing noodles as necessary and to an extent that does not impairs the texture-improving effect on the noodles of the indigestible starch used in the present invention and the modified starch used in the present invention. Examples of the additional raw material include a starch other than the indigestible starch used in the present invention and the modified starch used in the present invention, a carbohydrate, a seasoning such as salt and powdered soy sauce, a fat or oil, a powdered emulsifier, a thickener, a swelling agent, and the like. The content of the additional raw material in the noodle mix of the present invention is preferably 30% by mass or less, more preferably 20% by mass or less in the total amount of the mix. The noodle mix of the present invention may be in a powder form, a granular form, and the like.

The noodles produced using the noodle mix of the present invention are not particularly limited in their shape and type, and may be a noodle strand or a dough wrapper. Examples of the noodles include pasta, *udon,* Chinese noodles, *soba,* and the like, and pasta is preferable among these. Examples of the pasta include a short pasta, a long pasta, and a flat pasta, but the shape and type of the pasta are not particularly limited.

The production of noodles using the noodle mix of the present invention is carried out according to the method according to the invention. Fresh noodles containing the noodle mix of the present invention are produced by adding 23 to 40% by mass of kneading water based on the total mass of the mix, kneading the mixture to prepare a dough, and rolling the dough into a noodle sheet, followed by cutting to thereby form it into noodles, or extruding the dough through dies to form it into noodles. Further, the produced noodles may be dried.

The noodles produced using the noodle mix of the present invention tend to require a long boiling time because they are difficult to swell during cooking by boiling due to inclusion of an indigestible starch. Therefore, it is preferable to increase the surface area of the noodles to shorten the boiling time. For example, by forming concavities or grooves on the surface of the noodles, the surface area of the noodles can be increased. Thus, the noodles preferably have concavities or grooves on the surface. For example, when the noodles are a noodle wrapper or a short pasta, it is preferable to have concavities on the surface, and when the noodles are a noodle strand, it is preferable to have a groove along the long axis direction of the noodle on the surface. From the viewpoint of preventing deterioration of the appearance and texture of noodles after cooking by boiling, it is preferable that the size of the concavity and groove is small. The small concavity or groove means a concavity or groove having a size such that the noodles in the concavity or groove have a thickness of 20 to 80% of the maximum thickness of the noodles.

### Examples

The invention is explained in more detail below by way of examples, but the invention is not limited only to these examples.

### [Production of noodle mixes]

The powdery raw materials were mixed according to the proportion (parts by mass) shown in Tables 1 to 6 to produce noodle mixes. The powdery raw materials used are as follows. The protein content of each produced noodle mix was measured by the Kjeldahl method.

### Indigestible materials:

Wheat indigestible starch; Novelose W (Ingredion), dietary fiber content 85%
Tapioca indigestible starch; Pine starch RT (Matsutani Chemical Industry Co., Ltd.), dietary fiber content 75%
Corn indigestible starch; Nisshoku Roadster (Nihon Shokuhin Kako Co., Ltd.), dietary fiber content 60%
Potato indigestible starch; Versaafibe 1490 (Ingredion), dietary fiber content 90%
Indigestible dextrin; Fibersol 2 (Matsutani Chemical Industry Co., Ltd.), dietary fiber content 90%

### Modified starch:

Modified starch A; acetate tapioca starch (gelatinization starting temperature lower than that of by untreated tapioca starch by 0.1°C or more)
Modified starch B; pregelatinized rice starch (gelatinization starting temperature lower than that of untreated rice starch by 0.1°C or more)
Modified starch C; wheat starch heat-treated with an emulsifier (gelatinization starting temperature higher than that of untreated wheat starch by 2°C)

Starch: corn starch
Flour: durum semolina flour
Wheat protein: gluten
Egg protein: egg white powder

### [Production of noodles]

To 100 parts by mass of each noodle mix, 26 parts by mass of water was mixed and kneaded to prepare a dough. The dough was fed into a pasta making machine, extruded under reduced pressure of -600 mmHg, and then dried by an usual method to produce a dried spaghetti having a thickness of 1.6 mm. Each dried spaghetti was cooked for 12 minutes in a pan containing plenty of boiling water to produce a boiled spaghetti. Separately, as a reference example, a dried spaghetti (thickness: 1.6 mm) of 100% durum semolina, which is commercially available, was used, and a spaghetti was produced by boiling in the same manner.

### Evaluation

The texture of each freshly boiled spaghetti was evaluated for hardness, elasticity and viscousness with integer values of 1 to 5 points, respectively (the higher the score, the higher the evaluation). In the evaluation, each boiled spaghetti was scored by using 5-rating, with 5 points being equivalent to freshly boiled spaghetti of the reference example, and 1 point being equivalent to the boiled spaghetti after storage in a refrigerator for 12 hours. The hardness is an index of the degree of resistance due to deformation of the spaghetti when one holds the spaghetti in the mouth. The elasticity is an index of the degree of repulsion felt when one starts to bite the spaghetti with the teeth. The viscousness is an index of the toughness when one chews the spaghetti with the teeth. Evaluation was performed by 10 trained panelists and its average scores were determined. The results are given in Tables 1 to 6 as follows.

**Table 1**

| Mix blending (parts by mass) | | Example | | | Comparative Example | | | | | Reference Example |
|---|---|---|---|---|---|---|---|---|---|---|
| | | 1 | 2 | 3 | 1 | 2 | 3 | 4 | 5 | |
| Indigestible material | | | | | | | | | | |
| | Wheat indigestible starch | 50 | | | | | 50 | 65 | | |
| | Tapioca indigestible starch | | 50 | | | | | | | |
| | Corn indigestible starch | | | 50 | | | | | | |
| | Potato indigestible starch | | | | 50 | | | | | |
| | Indigestible dextrin | | | | | 50 | 15 | | | |
| Modified starch A | | 15 | 15 | 15 | 15 | 15 | | | 65 | |
| Gluten | | 17 | 17 | 17 | 17 | 17 | 17 | 17 | 17 | |
| Durum semolina | | 18 | 18 | 18 | 18 | 18 | 18 | 18 | 18 | 100 |
| Total | | 100 | 100 | 100 | 100 | 100 | 100 | 100 | 100 | 100 |
| Protein content | | 15 | 15 | 15 | 15 | 15 | 15 | 15 | 15 | 15 |
| Hardness | | 4.3 | 4.0 | 4.0 | 3.5 | 2.7 | 2.9 | 3.2 | 2.3 | 5.0 |
| Elasticity | | 4.2 | 4.4 | 4.0 | 2.6 | 3.4 | 3.9 | 2.0 | 3.2 | 5.0 |
| Viscousness | | 4.5 | 4.4 | 4.3 | 2.4 | 1.8 | 2.3 | 2.1 | 3.5 | 5.0 |

**Table 2**

| Mix blending (parts by mass) | | Example | | | Comparative Example Reference Example | | | | | |
|---|---|---|---|---|---|---|---|---|---|---|
| | | 4 | 5 | 6 | 6 | 7 | 8 | 9 | 10 | 11 |
| Indigestible material | | | | | | | | | | |
| | Wheat indigestible starch | 50 | | | 50 | 50 | | 50 | | |
| | Tapioca indigestible starch | | 50 | | | | 50 | | 50 | |
| | Corn indigestible starch | | | 50 | | | | | | 50 |
| Modified starch | | | | | | | | | | |
| | Modified starch A | 15 | | | | | | | | |
| | Modified starch B | | 15 | 15 | | | | | | |
| | Modified starch C | | | | 15 | 15 | 15 | | | |
| | Corn starch (unmodified) | | | | | | | 15 | 15 | 15 |
| Gluten | | | | 17 | 17 | | 17 | 17 | 17 | |
| Egg white powder | | 12 | 12 | | | 12 | | | | 12 |
| Durum semolina | | 23 | 23 | 18 | 18 | 23 | 18 | 18 | 18 | 23 |
| Total | | 100 | 100 | 100 | 100 | 100 | 100 | 100 | 100 | 100 |
| Protein content | | 17 | 17 | 15 | 15 | 15 | 15 | 15 | 15 | 17 |
| Hardness | | 4.2 | 3.8 | 3.8 | 3.8 | 3.4 | 3.5 | 3.1 | 2.9 | 2.8 |
| Elasticity | | 4.0 | 4.2 | 3.8 | 2.4 | 2.0 | 2.2 | 1.7 | 1.8 | 1.9 |
| Viscousness | | 4.2 | 4.1 | 4.1 | 2.7 | 2.2 | 2.3 | 2.1 | 2.1 | 2.1 |

**Table 3**

| Mix blending (parts by mass) | | Example | | | | |
|---|---|---|---|---|---|---|
| | | 7 | 8 | 9 | 10 | 11 |
| Indigestible material | | | | | | |
| | Wheat indigestible starch | 25 | | 25 | 25 | 20 |
| | Tapioca indigestible starch | 25 | 25 | | | 15 |
| | Corn indigestible starch | | 25 | | | 15 |
| | Potato indigestible starch | | | 25 | | |
| | Indigestible dextrin | | | | 25 | |
| Modified starch A | | 15 | 15 | 15 | 15 | 15 |
| Gluten | | 17 | 17 | 17 | 17 | 17 |
| Durum semolina | | 18 | 18 | 18 | 18 | 18 |
| Total | | 100 | 100 | 100 | 100 | 100 |
| Protein content | | 15 | 15 | 15 | 15 | 15 |
| Hardness | | 4.4 | 4.3 | 4.0 | 3.7 | 4.5 |
| Elasticity | | 4.5 | 4.4 | 4.0 | 3.8 | 4.6 |
| Viscousness | | 4.7 | 4.5 | 4.3 | 3.5 | 4.8 |

**Table 4**

| Mix blending (parts by mass) | Production Example | | | | | | | | |
|---|---|---|---|---|---|---|---|---|---|
| | 1 | 2 | 3 | 4 | 5 | 6 | 7 | 8 | 9 |
| Wheat indigestible starch | 7 | 10 | 25 | 40 | 50 | 58 | 59 | 60 | 62 |
| Modified starch A | 21 | 21 | 21 | 21 | 21 | 21 | 21 | 21 | 21 |
| Corn starch | 47 | 44 | 29 | 14 | 4 | | | | |
| Gluten | 17 | 17 | 17 | 17 | 17 | 17 | 17 | 17 | 17 |
| Durum semolina | 8 | 8 | 8 | 8 | 8 | 4 | 3 | 2 | |
| Total | 100 | 100 | 100 | 100 | 100 | 100 | 100 | 100 | 100 |
| Protein content | 14 | 14 | 14 | 14 | 14 | 13 | 13 | 13 | 13 |
| Hardness | 3.2 | 3.8 | 4.0 | 4.1 | 4.2 | 4.1 | 3.9 | 3.7 | 3.4 |
| Elasticity | 3.2 | 3.8 | 4.0 | 4.1 | 4.2 | 4.0 | 3.8 | 3.5 | 2.9 |
| Viscousness | 2.9 | 3.7 | 4.3 | 4.4 | 4.5 | 4.3 | 4.1 | 3.7 | 2.9 |

**Table 5**

| Mix blending (parts by mass) | Production Example | | | Example 1 | Production Example | | | |
|---|---|---|---|---|---|---|---|---|
| | 10 | 11 | 12 | | 13 | 14 | 15 | 16 |
| Wheat indigestible starch | 50 | 50 | 50 | 50 | 50 | 50 | 50 | 50 |
| Modified starch A | 3 | 5 | 10 | 15 | 25 | 28 | 30 | 33 |
| Gluten | 17 | 17 | 17 | 17 | 17 | 17 | 17 | 17 |
| Durum semolina | 30 | 28 | 23 | 18 | 8 | 5 | 3 | |
| Total | 100 | 100 | 100 | 100 | 100 | 100 | 100 | 100 |
| Protein content | 18 | 17 | 16 | 15 | 14 | 13 | 13 | 13 |
| Hardness | 3.1 | 3.8 | 4.1 | 4.3 | 4.3 | 4.2 | 4.0 | 3.6 |
| Elasticity | 2.8 | 3.7 | 4.1 | 4.2 | 4.4 | 4.2 | 3.9 | 2.2 |
| Viscousness | 3.1 | 4.1 | 4.1 | 4.5 | 4.2 | 4.0 | 3.7 | 2.8 |

**Table 6**

| Mix blending (parts by mass) | Production Example | | | Example 1 | Production Example | | | | |
|---|---|---|---|---|---|---|---|---|---|
| | 17 | 18 | 19 | | 20 | 21 | 22 | 23 | 24 |
| Wheat indigestible starch | 50 | 50 | 50 | 50 | 50 | 50 | 50 | 50 | 50 |
| Modified starch A | 15 | 15 | 15 | 15 | 15 | 15 | 15 | 15 | 15 |
| Gluten | 9 | 11 | 15 | 17 | 22 | 23 | 25 | 28 | |
| Egg white powder | | | | | | | | | 24 |
| Durum semolina | 26 | 24 | 20 | 18 | 13 | 12 | 10 | 7 | 11 |
| Total | 100 | 100 | 100 | 100 | 100 | 100 | 100 | 100 | 100 |
| Protein content | 6 | 8 | 12 | 15 | 18 | 19 | 20 | 22 | 22 |
| Hardness | 2.3 | 3.5 | 4.2 | 4.3 | 4.1 | 3.9 | 3.7 | 2.8 | 2.5 |
| Elasticity | 3.3 | 3.9 | 4.0 | 4.2 | 4.4 | 4.2 | 4.1 | 3.8 | 3.5 |
| Viscousness | 3.1 | 3.7 | 4.1 | 4.5 | 4.5 | 4.3 | 3.9 | 3.3 | 2.8 |

## Claims

1. A noodle mix comprising from 10 to 60% by mass of an indigestible starch derived from one or more of wheat, tapioca, corn and sweet potato, and from 5 to 30% by mass of a modified starch having a gelatinization starting temperature lower than that of a raw material starch thereof by 0.1°C or more, and the mix having a protein content of 8 to 20% by mass,
wherein
the indigestible starch is one or more selected from the group consisting of an indigestible wheat starch, an indigestible tapioca starch, an indigestible corn starch and an indigestible sweet potato starch,
the modified starch is one or more selected from the group consisting of an acetylated starch and a pregelatinized starch,
the noodle mix further comprises a cereal flour, the content of the cereal flour being 3% by mass or more and 80% by mass or less based on the amount of the indigestible starch,
the noodle mix does not comprise an indigestible dextrin.

2. The noodle mix according to claim 1, wherein the indigestible starch is an indigestible starch comprising two or more selected from the group consisting of an indigestible wheat starch, an indigestible tapioca starch, an indigestible corn starch, and an indigestible sweet potato starch.

3. The noodle mix according to claim 1 or 2, wherein the modified starch having a gelatinization starting temperature lower than that of a raw material starch thereof by 0.1°C or more is one or more selected from the group consisting of acetylated starch and pregelatinized starch.

4. The noodle mix according to any one of claims 1 or 3, which further comprises one or more protein materials selected from the group consisting of wheat protein, egg protein and soy protein.

5. The noodle mix according to any one of claims 1 to 4, which is a pasta mix.

6. A method for producing noodles comprising:
(i) adding to a noodle mix according to any one of claims 1 to 5, 23 to 40% by mass of kneading water based on the total mass of the noodle mix,
(ii) kneading the mixture to prepare a dough,
(iii) forming noodles by rolling the dough into a noodle sheet and cutting the noodle sheet, or by extruding the dough through dies.

7. The method for producing noodles according to claim 6 further comprising
(iv) drying the produced noodles.

8. A noodle obtained by a method consisting of the method steps according to claim 6 or 7.

9. The noodle according to claim 8, wherein the noodle has a concavity or groove on the surface.

10. The noodle according to claim 8 or 9, which is pasta.

## Patentansprüche

1. Nudelmischung umfassend von 10 bis 60 Massenprozent einer unverdaulichen Stärke, die von einem oder mehreren von Weizen, Tapioka, Mais und Süßkartoffel abgeleitet ist, und von 5 bis 30 Massenprozent einer modifizierten Stärke, die eine um 0,1°C oder mehr niedrigere Anfangstemperatur der Gelatinierung aufweist als die eines Stärke-Rohmaterials derselben, und wobei die Mischung einen Proteingehalt von 8 bis 20 Massenprozent aufweist,
wobei die unverdauliche Stärke eine oder mehrere ist ausgewählt aus der Gruppe bestehend aus einer unverdaulichen Weizenstärke, einer unverdaulichen Tapiokastärke, einer unverdaulichen Maisstärke und einer unverdaulichen Süßkartoffelstärke,
wobei die modifizierte Stärke eine oder mehrere ist ausgewählt aus der Gruppe bestehend aus einer acetylierten Stärke und einer vorgelatinierten Stärke,
wobei die Nudelmischung ferner ein Getreidemehl umfasst, wobei der Gehalt an Getreidemehl 3 Massenprozent oder mehr und 80 Massenprozent oder weniger beträgt basierend auf der Menge der unverdaulichen Stärke,
wobei die Nudelmischung kein unverdauliches Dextrin umfasst.

2. Die Nudelmischung nach Anspruch 1, wobei die unverdauliche Stärke eine unverdauliche Stärke ist, die zwei oder mehrere umfasst, ausgewählt aus der Gruppe bestehend aus einer unverdaulichen Weizenstärke, einer unverdaulichen Tapiokastärke, einer unverdaulichen Maisstärke und einer unverdaulichen Süßkartoffelstärke.

3. Die Nudelmischung nach Anspruch 1 oder 2, wobei die modifizierte Stärke, die eine um 0,1°C oder mehr niedrigere Anfangstemperatur der Gelatinierung aufweist als die eines Stärke-Rohmaterials derselben, eine oder mehrere ist ausgewählt aus der Gruppe bestehend aus einer acetylierten Stärke und einer vorgelatinierten Stärke.

4. Die Nudelmischung nach einem der Ansprüche 1 oder 3, die ferner ein oder mehrere Protein-Materialien aufweist ausgewählt aus der Gruppe bestehend aus Weizenprotein, Eiprotein und Sojaprotein.

5. Die Nudelmischung nach einem der Ansprüche 1 bis 4, bei der es sich um eine Pastamischung handelt.

6. Verfahren zur Herstellung von Nudeln umfassend:
(i) Zugeben zu einer Nudelmischung nach einem der Ansprüche 1 bis 5, von 23 bis 40 Massenprozent Wasser zum Kneten basierend auf der Gesamtmasse der Nudelmischung,
(ii) Kneten der Mischung, um einen Teig herzustellen,
(iii) Formen der Nudeln durch Ausrollen des Teigs zu einer Nudelplatte und Schneiden der Nudelplatte, oder durch Extrudieren des Teigs durch Düsen.

7. Das Verfahren zur Herstellung von Nudeln nach Anspruch 6, ferner (iv) das Trocknen der hergestellten Nudeln umfassend.

8. Nudel, erhältlich nach einem Verfahren, bestehend aus den Verfahrensschritten nach Anspruch 6 oder 7.

9. Die Nudel nach Anspruch 8, wobei die Nudel eine Konkavität oder Rille auf der Oberfläche aufweist.

10. Die Nudel nach Anspruch 8 oder 9, bei der es sich um Pasta handelt.

## Revendications

1. Mélange de nouilles comprenant de 10 à 60 % en masse d'un amidon indigeste dérivé d'un ou plusieurs éléments parmi du blé, tapioca, maïs et patate douce, et de 5 à 30 % en masse d'un amidon modifié ayant une température de départ de gélatinisation inférieure à celle d'une matière brute d'amidon de celui-ci de 0,1 °C ou plus, et le mélange ayant une teneur en protéine de 8 à 20 % en masse,
dans lequel
l'amidon indigeste est un ou plusieurs éléments sélectionnés dans le groupe constitué d'un amidon de blé indigeste, d'un amidon de tapioca indigeste, d'un amidon de maïs indigeste et d'un amidon de patate douce indigeste,
l'amidon modifié est un ou plusieurs éléments sélectionnés dans le groupe constitué d'un amidon acétylé et d'un amidon prégélatinisé,
le mélange de nouilles comprend en outre une farine de céréales, la teneur en farine de céréales étant de 3 % en masse ou plus et de 80 % en masse ou moins sur la base de la quantité de l'amidon indigeste,
le mélange de nouilles ne comprend pas de dextrine indigeste.

2. Mélange de nouilles selon la revendication 1, dans lequel l'amidon indigeste est un amidon indigeste comprenant deux éléments ou plus sélectionnés dans le groupe constitué d'un amidon de blé indigeste, d'un amidon de tapioca indigeste, d'un amidon de maïs indigeste, et d'un amidon de patate douce indigeste.

3. Mélange de nouilles selon la revendication 1 ou 2, dans lequel l'amidon modifié ayant une température de départ de gélatinisation inférieure à celle d'une matière brute d'amidon de celui-ci de 0,1 °C ou plus est un ou plusieurs éléments sélectionnés dans le groupe constitué d'amidon acétylé et d'amidon prégélatinisé.

4. Mélange de nouilles selon l'une des revendications 1 ou 3, qui comprend en outre une ou plusieurs matières protéiques sélectionnées dans le groupe constitué de protéine de blé, protéine d'œuf et protéine de soja.

5. Mélange de nouilles selon l'une des revendications 1 à 4, qui est un mélange de pâtes.

6. Procédé de production de nouilles comprenant :
(i) l'ajout à un mélange de nouilles selon l'une des revendications 1 à 5, 23 à 40 % en masse d'eau de pétrissage sur la base de la masse totale du mélange de nouilles,
(ii) le pétrissage du mélange pour préparer une pâte,
(iii) la formation de nouilles en roulant la pâte en une feuille de nouilles et en coupant la feuille de nouilles, ou en extrudant la pâte à travers des filières.

7. Procédé de production de nouilles selon la revendication 6, comprenant en outre
(iv) le séchage des nouilles produites.

8. Nouilles obtenues par un procédé constitué des étapes de procédé selon la revendication 6 ou 7.

9. Nouilles selon la revendication 8, dans lesquelles les nouilles ont une concavité ou une rainure sur la surface.

10. Nouilles selon la revendication 8 ou 9, qui sont des pâtes.
